(19) Europäisches Patentamt
European Patent Office
Office européen des brevets

(11) Numéro de publication : **0 012 746**
**B1**

(12) # FASCICULE DE BREVET EUROPÉEN

(45) Date de publication du fascicule du brevet : **13.07.83**

(51) Int. Cl.$^3$ : **H 04 N 1/22**, G 02 F 1/13

(21) Numéro de dépôt : **78900304.3**

(22) Date de dépôt : **30.11.78**

(86) Numéro de dépôt international : **PCT/FR 78/00044**

(87) Numéro de publication internationale : **WO WO/79003 (14.06.79 Gazettee 79/12)**

(54) **PROCEDE DE TELECOPIE UTILISANT UNE CELLULE A CRISTAL LIQUIDE SMECTIQUE ET TELECOPIEUR EMETTEUR-RECEPTEUR METTANT EN ŒUVRE CE PROCEDE**

(30) Priorité : **01.12.77 FR 7736223**

(43) Date de publication de la demande : **09.07.80 Bulletin 80/14**

(45) Mention de la délivrance du brevet : **13.07.83 Bulletin 83/28**

(84) Etats contractants désignés : **DE GB SE**

(56) Documents cités :
**DE A 2 753 763**
**DE A 2 819 538**
**FR A 2 057 035**
**FR A 2 199 425**
**FR A 2 237 385**
**FR A 2 275 087**
**FR A 2 292 253**
**US A 3 637 291**
**US A 3 957 347**

**Japan Telecommunications Review, volume 19, no. 3, juillet 1977, Tokyo M. Orii et al. « Mini Fax » — A Trial Small-Size Facsimile — pages 209-216**

(73) Titulaire : **THOMSON-CSF**
**173, Boulevard Haussmann**
**F-75379 Paris Cedex 08 (FR)**

(72) Inventeur : **HARENG, Michel**
**Thomson-CSF, SCPI 173 bld. Haussmann**
**F-75360 Paris Cedex 08 (FR)**
Inventeur : **LE BERRE, Serge**
**Thomson-CSF, SCPI 173 bld. Haussmann**
**F-75360 Paris Cedex 08 (FR)**
Inventeur : **LECLERC, Pierre**
**Thomson-CSF, SCPI 173 bld. Haussmann**
**F-75360 Paris Cedex 08 (FR)**

(74) Mandataire : **Wang, Pierre et al**
**THOMSON-CSF SCPI 173, Bld Haussmann**
**F-75379 Paris Cedex 08 (FR)**

**EP 0 012 746 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Procédé de télécopie utilisant une cellule à cristal liquide smectique et télécopieur émetteur-récepteur mettant en œuvre ce procédé

La présente invention concerne un télécopieur émetteur-récepteur, et plus particulièrement un télécopieur utilisant un film d'un matériau mésomorphe présentant une phase smectique pour l'enregistrement intermédiaire d'un élément linéaire du document à télécopier, cet enregistrement intermédiaire étant ensuite projeté sur une surface photosensible. Le dispositif est conçu pour fonctionner, tant à l'émission qu'à la réception, couplé aussi bien au réseau téléphonique ordinaire qu'à des lignes de transmission de données à grand débit.

La quasi-totalité des télécopieurs actuellement utilisés procèdent par enregistrement direct. Le signal vidéo, résultant de l'analyse point par point et ligne par ligne du document à télécopier, est appliqué à une électrode ayant la forme d'une fine pointe, qui se déplace au voisinage immédiat d'un papier sensible pour y écrire une succession de points. L'impression du papier est obtenue par différents procédés. Le papier peut être muni d'une couche conductrice sous jacente formée de noir de carbone ou d'un électrolyte ; dans le premier cas, une tension appliquée à la pointe engendre une étincelle qui perce le papier et fait apparaître le noir de carbone ; dans le second cas, le courant issu de la pointe entraîne la migration à la surface du papier d'ions métalliques colorés. Un papier thermo-sensible, obtenu par imprégnation de sels acides gras décomposables par la chaleur, peut être également utilisé ; le passage du courant échauffe la pointe et le métal libéré colore le papier. D'autres systèmes utilisent la pointe pour déposer par effet Corona sur un papier enduit d'une couche diélectrique, des charges électriques ponctuelles qui permettent de fixer ultérieurement une poudre colorante appelée « toner ». Tous ces procédés sont mal adaptés à la reproduction des demi-teintes. En outre, la dimension de la pointe et les effets utilisés limitent la finesse des points donc la définition du document reproduit, à des valeurs de l'ordre de 3 à 4 points par mm.

Par ailleurs, il est connu d'utiliser des films minces de matériaux mésomorphes, également connus sous le nom de cristaux liquides, pour afficher des informations transmises sous la forme d'un signal vidéo.

Ainsi, il a été proposé, dans un brevet intitulé « Dispositif de visualisation pour récepteur de télévision » déposé en France le 6 Août 1970 par RCA Corporation et publié sous le n° 2.057.035, d'utiliser dans un système de téléreprographie une cellule linéaire contenant un matériau cristal liquide en phase nématique. Le document à transmettre est analysé ligne par ligne par un tube Vidicon. A la réception, le signal vidéo ainsi transmis est mis en mémoire ligne après ligne, les N signaux correspondant aux N points d'une ligne étant appliqué simultanément aux N éléments de la cellule dont ils modulent la diffusivité pendant que sont stockés les signaux correspondant à la ligne suivante. L'image de la cellule, éclairée par une source lumineuse est projetée sur une surface photosensible. L'inscription dans le matériau cristal lecture et sa projection sur la surface photosensible sont ainsi simultanées.

Dans un brevet intitulé : « Locally erasable thermooptic smectic liquid-crystals storage displays », déposé aux U.S.A. le 19 octobre 1972 et délivré le 12 Mars 1974 sous le numéro 3.796.999, F. J. KAHN a proposé de balayer un film maintenu en phase smectique par un faisceau de lumière infra-rouge modulé en intensité. Le film est initialement en structure ordonnée, donc transparent. L'énergie thermique communiquée aux points du film irradiés par le faisceau sous son intensité maximale est suffisante pour les faire transiter temporairement de la phase smectique dans la phase liquide isotrope. En revenant rapidement à la température initiale correspondant à la phase smectique, ces points prennent une structure macroscopiquement désordonnée, dite en conique focale, qui est diffusante. L'information ainsi enregistrée dans le film reste stable pendant plusieurs heures ; pour l'effacer, le film est porté à nouveau en phase liquide, puis refroidi lentement jusqu'à la phase smectique où il reprend une structure ordonnée transparente. Le dispositif se prête mal à l'inscription de demi-teintes, et une partie importante de l'énergie du faisceau lumineux est perdue dans le modulateur.

Dans le brevet français intitulé : « Dispositif de reproduction d'images en noir et blanc utilisant un matériau présentant une phase smectique et système de télétransmission et téléreprographie mettant en œuvre ce dispositif », déposé par la Demanderesse le 14 Juin 1974 et délivré le 13 Février 1976 sous le numéro 2.275.087, il a été proposé d'enserrer le film en phase smectique entre deux électrodes transparentes, entre lesquelles est appliqué le signal vidéo. Un faisceau infra-rouge d'intensité constante balaie la couche en synchronisme avec ce signal. Les points balayés sont ainsi soumis, lors de leur refroidissement de la phase liquide à la phase smectique à un champ électrique d'intensité variable. La restructuration du film en structure ordonnée, nulle en l'absence de champ, est d'autant plus prononcée que ce dernier est plus intense. Le signal vidéo module ainsi la diffusivité des points balayés. Ce dispositif fournit une inscription avec demi-teintes et économise l'emploi d'un modulateur électro-optique. Néanmoins, l'obtention de vitesses d'inscriptions élevées entraîne la mise en œuvre de sources infra-rouges hautement directives et très puissantes ; de telles sources, ainsi que les déviateurs de faisceau qui les accompagnent, constituent en outre des organes encombrants et coûteux.

Dans ce même brevet, il est également proposé d'utiliser l'effet mémoire présenté par le dispositif de reproduction d'images pour une application à la téléreprographie. L'enregistrement du document transmis est alors indirect et effectué en deux étapes : dans une première étape une page entière du

document est affichée dans la couche smectique, puis, dans une deuxième étape, projetée sur une surface photosensible. Toutefois, le dispositif ci-dessus décrit, s'il permet d'obtenir une excellente définition du document transmis, met en œuvre, comme déjà signalé un matériel encombrant et coûteux. De plus, il se prête difficilement au couplage avec la partie émetteur indispensable à tout dispositif de télécopie.

Enfin, il est également connu de commander par multiplexage une cellule d'affichage à cristal liquide. A titre d'exemple, dans un brevet intitulé « Procédé et dispositif utilisant un effet thermo-optique dans un cristal liquide pour la reproduction d'images en temps réel et sans mémoire » déposé par la Demanderesse le 21 Novembre 1974 et publié sous le N° 2.292.253, est décrit un dispositif permettant d'échauffer sélectivement une couche de cristal liquide nématique grâce à une matrice de résistances commandées par multiplexage.

L'objet de la présente invention est de proposer un télécopieur palliant les inconvénients de l'art connu et qui, tout en étant à la fois émetteur et récepteur, soit de prix de revient peu élevé et permette néanmoins une reproduction des documents transmis avec des demi-teintes et une définition élevée, ainsi qu'éventuellement une vitesse de reproduction élevée compatible avec les lignes de transmission de données à grand débit.

Pour atteindre ce résultat, la présente invention utilise un enregistrement intermédiaire dans une couche de cristal liquide, procédé qui présente l'avantage, par rapport aux procédés à enregistrement direct, de permettre une reproduction avec une définition plus élevée et des demi-teintes.

L'invention propose également d'effectuer cet enregistrement intermédiaire dans un cristal liquide en phase smectique, ce qui permet d'obtenir un contraste supérieur à celui que fournirait un enregistrement dans un matériau en phase nématique. En outre, le fait qu'un enregistrement en phase smectique est un enregistrement à mémoire, propriété qui n'existe pas pour les enregistrements en phase nématique, a été mis à profit, dans un des exemples de réalisation décrits, pour obtenir une définition très élevée du document reproduit sans pour autant avoir recours à une connectique importante.

Ceci étant, l'invention avait à faire face au problème de l'inscription intermédiaire dans une couche smectique. L'utilisation d'un laser pour échauffer la couche point par point était difficilement envisageable, pour des raisons d'encombrement, de consommation énergétique et de coût. Ce problème a été résolu en utilisant un procédé qui consiste à échauffer simultanément un segment rectiligne de la couche smectique correspondant à un nombre élevé de points discrets par une impulsion de tension appliquée à une résistance chauffante en contact avec la couche ; lors du refroidissement subséquent de cette dernière, les tensions de commande correspondant aux différents points, précédemment stockés dans une mémoire à partir du signal vidéo reçu par le télécopieur, sont appliquées simultanément à l'ensemble du segment. L'invention propose également de disposer bout à bout un certain nombre de tels segments, et de les commander par multiplexage, afin d'afficher une ligne entière avec une très haute définition.

Enfin, l'invention propose d'associer dans un même dispositif optique la cellule linéaire de cristal liquide destinée à l'inscription intermédiaire dans le fonctionnement en réception du télécopieur, et une barrette de photodétecteurs permettant de lire le document à transmettre dans le fonctionnement en émission, le passage d'un mode de fonctionnement à l'autre se faisant par simple basculement d'un miroir plan.

D'autres particularités et avantages de l'invention apparaîtront clairement dans la description ci-dessous, présentée à titre d'exemple non limitatif. Les figures annexées représentent :

Figure 1 : une vue schématique du télécopieur suivant l'invention ;

Figures 2a, 2b, 2c : la constitution des moyens d'affichage intermédiaires, constitués par une cellule à matériau mésomorphe dans un premier exemple de réalisation selon l'invention, à savoir respectivement, une fente-diaphragme déposée sur la face externe d'une des lames de la cellule, une résistance chauffante transparente disposée sur la face interne de cette même lame, et P électrodes transparentes disposées sur la face interne de l'autre lame ;

Figure 3 : l'agencement de P détecteurs constituant une mosaïque linéaire de détecteurs et du générateur de commande associé à cette mosaïque, dans ce premier exemple de réalisation selon l'invention ;

Figure 4 : un schéma montrant comment s'effectue la lecture d'une page de document à télécopier dans ce premier exemple de réalisation selon l'invention ;

Figure 5 : un diagramme montrant la synchronisation des impulsions de tension de commande, de chauffage et de lumière dans ce premier exemple de réalisation selon l'invention ;

Figure 6 : l'agencement de P × Q détecteurs constituant une mosaïque linéaire de détecteurs et du générateur de commande de lecture par multiplexage associé à cette mosaïque dans un second exemple de réalisation selon l'invention ;

Figures 7a et 7b : la constitution de la cellule d'affichage, à savoir les dispositions respectives de Q résistances chauffantes et de P × Q électrodes, et des moyens de commande par multiplexage qui leur sont associés, dans ce même second exemple de réalisation selon l'invention.

On peut voir sur la figure 1 une représentation schématique du télécopieur émetteur-récepteur suivant l'invention.

Ce dispositif comporte en tant qu'organes optiques et optoélectroniques :

— des moyens d'éclairement comprenant une source lumineuse rectiligne 100, un réflecteur 101, un

condensateur 102 et une rente-diaphragme 103 ;

— des moyens d'affichage linéaire intermédiaire constitués par la cellule à cristal liquide 11. disposée au voisinage immédiat du diaphragme 103 ;

— une mosaïque linéaire de photodétecteurs 12, de dimensions identiques à celles de la fente diaphragme 103 ;

— des moyens de projection comprenant un miroir plan fixe et semi-transparent 130, un objectif de projection 131 muni d'un diaphragme variable 132 et un miroir plan 133, mobile autour d'un axe 134 perpendiculaire au plan de la figure ;

— une surface photosensible mobile 14 ;

— des moyens de positionnement 15 du document à photocopier.

La cellule à cristal liquide 11 est représentée sur la figure 1 selon une vue en coupe effectuée perpendiculairement à sa plus grande dimension. Elle comporte deux lames solides transparentes 20 et 21, parallèles et séparées l'une de l'autre par deux cales d'épaisseur 210 et 201. L'espace ménagé entre les lames 20 et 21 et les cales 210 et 201 est rempli par une couche 3 d'un matériau mésomorphe présentant une phase smectique. Les références 3i et 3ij sont relatives à deux dépôts conducteurs transparents garnissant partiellement les faces internes les lames 20 et 21 et faisant respectivement office l'un de contre électrode et de résistance chauffante et l'autre d'électrode. La cellule 11 comporte au moins un ensemble de P électrodes et au moins une résistance chauffante.

A titre d'exemple, on peut utiliser du verre ou du saphir pour constituer les lames 20 et 21 et de l'oxyde d'étain ($SnO_2$) ou d'indium ($InO_2$), ou un mélange de ces deux oxydes, pour les dépôts conducteurs 11 et 12. Les lames 20 et 21 sont espacées de 10 à 20 μ. On obtient de bons résultats en utilisant comme matériau mésomorphe des composés de la famille des cyano-biphényls, seuls ou en mélange, et notamment le cyano-octyl-biphenyl (C. O. B.) répondant à la formule

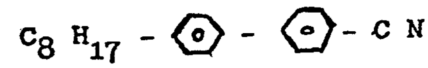

qui présente entre 20 et 32,5 °C une phase smectique A et dont la transition nématique-liquide isotrope s'effectue à 40°5. Un dispositif thermostatique, non représenté sur la figure, maintient si besoin en est, le matériau mésomorphe, en l'absence de courant dans la ou les résistances chauffantes, à une température légèrement inférieure à la température de transition smectique-nématique. Eventuellement, les surfaces des dépôts conducteurs et des lames en contact avec le matériau mésomorphe peuvent être traitées par des procédés connus pour permettre un retour spontané, mais relativement lent, de ce dernier en phase ordonnée transparente ; on peut en particulier utiliser des surfactants appropriés, notamment le produit connu sous le nom de « Silane » qui est d'un emploi étendu et convient parfaitement lorsque le matériau mésomorphe est le C. O. B. précédemment cité.

La source lumineuse 100 est par exemple une source à filament rectiligne, disposée perpendiculairement au plan de la figure 1. Le condensateur 102 forme l'image de la source 100 dans le plan du diaphragme 103. Le miroir plan 133 peut avoir sa surface réfléchissante dirigée soit vers la surface photosensible 14 (position « réception » représentée en traits pleins sur la figure 1), soit vers les moyens de positionnement 15 au document à photocopier (position « émission » représentée en traits ponctués), de façon à projeter dans le plan de l'une ou l'autre de ces surfaces l'image de la fente-diaphragme 103 fournie par l'objectif 131.

Le condensateur 102 présente une ouverture numérique relativement faible, f/6 ou f/8 par exemple. L'ouverture numérique de l'objectif 131 est déterminée par le diaphragme 132 dont l'ouverture est liée à la position du miroir 133. Lorsque le miroir est en position « réception », l'ouverture du diaphragme 132 est juste suffisante pour laisser passer le flux lumineux émanant du condensateur 102 après traversée du diaphragme 103, en l'absence de toute diffusion occasionnée par la cellule 11. Au contraire, lorsque le miroir 133 est en position « émission », le diaphragme 132 est largement ouvert, de façon à laisser l'objectif 131 travailler à pleine ouverture.

La surface photosensible 14 peut être constituée par un papier revêtu d'une émulsion argentique, par exemple un papier à développement à chaud. Ce peut être également une couche d'un matériau photoconducteur, sélénium ou oxyde de zinc par exemple, utilisée suivant les techniques connues en photocopie électrostatique. Le dispositif de développement, de fixation et de transfert éventuel de l'information enregistrée, dispositif qui appartient à l'art connu, n'a pas été représenté sur la figure 1. La mosaïque linéaire de détecteurs 12 est disposée symétriquement à la couche 3 par rapport au miroir semi-transparent 130 et se trouve ainsi, lorsque le miroir plan 133 est en position « émission », dans le plan conjugué du document à photocopier maintenu par les moyens de positionnement 15.

Le télécopieur de la figure 1 possède en outre les organes mécaniques suivants :

— un modulateur mécanique, composé d'un disque muni de fentes radiales, interposé au voisinage de la source 100, entre cette dernière et l'objectif 102, et actionné par un moteur 105 ;

— un premier système moteur 106 permettant de translater l'ensemble constitué par les moyens d'éclairement 100, 101 et 102, le modulateur 104 et 105, le diaphragme 103, la cellule 11, le miroir semi-transparent 130, le détecteur 12 et l'objectif 131. Ce déplacement, qui s'effectue suivant une direction

perpendiculaire tant à l'axe optique commun des objectifs 102 et 131 qu'à l'axe 134 de rotation du miroir 133, permet de déplacer l'image de la source lumineuse 100 vue à travers la fente diaphragme 103 soit dans le plan de la surface photosensible 14, soit dans le plan des moyens de positionnement 15, selon la position du miroir 133 ;

— un second système moteur 135 commandant la rotation du miroir 133 pour lui permettre d'occuper l'une ou l'autre des deux positions « réception » et « émission » précédemment mentionnées, toutes deux à 45° de l'axe optique commun aux deux objectifs 102 et 131. Eventuellement, ce même système moteur commande un déplacement continu ou pas à pas du miroir 133 de part et d'autre des deux positions moyennes définies ci-dessus, de telle sorte que l'image de la source 100 balaye les surfaces 14 ou 15 ; le système moteur 106 qui, assumant la même fonction, devient inutile, est alors supprimé ;

— un troisième système moteur, permettant le déplacement de la surface photosensible 14. La figure 1 concerne plus spécialement le cas où la surface photosensible 14 est une émulsion argentique disposée sur un rouleau de papier 140, la feuille étant progressivement entraînée par les deux presseurs circulaires 141, 142 entraînés par le moteur 143 ; dans l'exemple décrit, le déplacement de la surface 14 s'effectue perpendiculairement à l'image de la source 100 vue à travers la fente diaphragme 103. Selon une variante de l'invention, le déplacement de la surface 14 peut également s'effectuer parallèlement à l'image de la source 100. La surface photosensible 14 peut être également disposée sur une surface cylindrique en rotation autour de son axe, axe qui est alors disposé parallèlement à l'image de la source ; un tel arrangement est utilisable notamment lorsque l'on utilise un matériau photoconducteur selon une technique connue de la copie électrostatique ;

— un quatrième système moteur 15 assurant la translation, suivant une direction perpendiculaire au plan de la figure, des moyens de positionnement 15 ;

— un système de commande 136 de l'ouverture du diaphragme 132.

Enfin le dispositif de la figure 1 comporte un certain nombre de circuits électroniques, notamment :

— un bloc logique de commande 16 comportant un contacteur à deux positions « émission » « réception » et munie d'une horloge pilote ; ce bloc contrôle le système de commande 136 du diaphragme 132 et, par le moteur 135, la position « émission » ou « réception » du miroir 133 ; il émet en outre des signaux permettant de synchroniser : à l'émission, le mouvement des moteurs 106 ou 135 assurant le balayage lumineux du document à télécopier disposé en 15, le mouvement du moteur 151 déplaçant ce même document et le fonctionnement des moyens photodétecteurs linéaires 12 ; à la réception, le mouvement du moteur 105 entraînant le disque modulateur 104, le mouvement des moteurs 106 ou 135 assurant le balayage lumineux de la surface photosensible disposé en 14, le mouvement du moteur 143 assurant le déplacement de cette même surface 14 et le fonctionnement de la cellule 11 ;

— un générateur de commande de lecture 170 recevant lors de la phase « émission », les impulsions de commande de provenance du bloc logique 16 et commandant la lecture de la mosaïque linéaire de photodétecteurs 12 ; ce générateur de commande envoie vers la ligne de transmission, par le canal de l'amplificateur 171, et d'un éventuel système de compression de l'information, non représenté sur la figure, le signal $S_L$ qui comporte l'information lue par les détecteurs, et les signaux de synchronisation lignes et images ;

— un amplificateur sélecteur 180 qui reçoit et amplifie le signal $S_R$ en provenance de la ligne de transmission, et en extrait les impulsions de synchronisation vers la logique 16 ;

— un échantillonneur 181, sous la commande du bloc logique 16, échantillonne le signal vidéo en provenance de l'amplificateur 180 en une série d'impulsions de tension de commande distinctes à fréquence constante ;

— un convertisseur-série-parallèle 182 également commandé par le bloc logique 16 met en mémoire les impulsions successives reçues de l'échantillonneur 181 et les applique simultanément, à intervalles de temps régulièrement espacés, par paquets de P, aux ensembles de P électrodes telles que l'électrode 3ij de la cellule 11 ; les électrodes de rang 1 de chaque ensemble reçoivent ainsi simultanément la première impulsion de tension de commande $V_{C1}$ emmagasinée par la mémoire, les électrodes de rang 2 la deuxième $V_{C2}$... et les électrodes de rang P la Pème impulsion $V_{CP}$. Si la compression de l'information est utilisée pour la transmission du document, la partie réception du télécopieur doit comporter une mémoire tampon de deux à trois lignes de capacité minimale. Cette mémoire tampon constitue alors la mémoire du convertisseur série parallèle 182.

— un générateur d'impulsions de chauffage 190, qui comporte autant de sorties qu'il y a de résistances chauffantes telles que 3i dans la cellule 11 pour délivrer à ces dernières, sous la commande du bloc logique 16, des impulsions de chauffage $I_{C1}$, $I_{C2}$, ..., $I_{CQ}$ régulièrement espacées dans le temps, en synchronisme avec les impulsions de tension de commande appliquées aux électrodes.

Les figures 2 à 5 se rapportent à un premier exemple de réalisation du dispositif représenté par la figure 1, destiné plus spécialement à travailler avec un réseau téléphonique classique muni d'un dispositif de compression de l'information. La caractéristique essentielle de ce premier exemple est qu'un ensemble de P lignes du document à télécopier est lu et écrit en parallèle.

Les figures 2a, 2b et 2c montrent la constitution de la cellule 11 et représentent respectivement la face externe de la lame 20, la face interne de cette même lame 1 et la face interne de la lame 21.

Comme le montre la figure 2a, la face externe de la lame 20, qui constitue la partie externe de la

cellule dirigée vers la source lumineuse 100 comporte un revêtement opaque 200, constituée par un dépôt métallique, dans lequel est ménagée une fente rectiligne 103 laissant nue la surface de la lame transparente et qui constitue la fente-diaphragme précédemment mentionnée et désignée sous la même référence sur la figure 1.

La figure 2b montre la configuration du dépôt conducteur transparent 31 déposé sur la face interne de la lame 20, pour constituer une résistance chauffante unique ; ce dépôt forme une bande allongée, de dimensions légèrement supérieures à celles de la fente 103 disposée sur l'autre face de la lame (représentée en traits ponctués sur la figure 2a) qu'il recouvre entièrement. Une des extrémités du dépôt 31 est reliée à la masse, l'autre reçoit les impulsions $I_{C1}$ délivrées par une sortie unique du générateur 190.

La figure 2c montre la configuration des dépôts conducteurs transparents 311, 312 ... 31P qui constituent l'ensemble unique de P électrodes identique garnissant la face interne de la lame 21. Sur cette figure, la position qu'occupe la fente 103 lorsque la cellule est assemblée a été représentée en traits ponctués pour permettre de situer les positions respectives dans la cellule de la fente 103, de la résistance chauffante contre électrode 31 et des électrodes 311 à 31P. On voit que ces électrodes garnissent toute la longueur de la surface située vis-à-vis de la résistance chauffante, et ont sensiblement même longueur que cette dernière. Elles reçoivent simultanément du convertisseur série-parallèle 182 les impulsions de tension de commande $V_{C1}$, $V_{C2}$, ... $V_{CP}$.

La figure 3 montre l'agencement, dans ce premier exemple de réalisation, de la mosaïque linéaire de détecteurs 12, et du générateur de commande de lecture 170 qui lui est associé.

La mosaïque 12 comporte P détecteurs photo-conducteurs identiques alignés 121, 122, ... 12P, soit autant d'éléments qu'il y a d'électrodes 311, ..., 31P dans la cellule 11. Les traits ponctués représentent l'image au grandissement 1 de la fente-diaphragme 103, projetée dans le plan 15 par l'objectif 131 et reprojetée par ce même objectif et le miroir semi-transparent 130, dans le plan de la mosaïque linéaire 12. Les surfaces sensibles des détecteurs sont alignées pour couvrir la totalité de cette image.

Le générateur de commande 170 comporte une source de tension E, reliée à une borne commune des détecteurs, P interrupteurs $I_1$, $I_2$, ..., $I_P$ permettent chacun de relier à la masse, par le canal d'une résistance de charge commune R, l'autre borne du détecteur correspondant à un bloc de commande C déclenchant, en fonction du signal reçu du bloc logique 16, la fermeture momentanée successivement de chaque interrupteur. Le signal de lecture, prélevé en amont de la résistance R, est envoyé à l'entrée de l'amplificateur 171.

Le fonctionnement du télécopieur, suivant ce premier exemple de réalisation, s'effectue comme suit :

La mise sur position « émission » du bloc logique 16 entraîne le déclenchement d'une impulsion de chauffage appliquée à la résistance chauffante 31 ; la chaleur dégagée porte temporairement la couche 3 de matériau mésomorphe de la phase smectique en phase liquide isotrope ; pendant le retour subséquent de la couche 3 en phase smectique, le bloc logique 16 déclenche, par l'intermédiaire des circuits 181 et 182, P impulsions de tension de commande identiques, de valeur maximale, qui sont appliquées aux P électrodes 311 ..., 31P de la cellule et provoquent l'orientation uniforme, pour un temps indéterminé, de la couche 3. La cellule 11 est alors uniformément transparente.

Simultanément, le bloc logique 16 a mis le modulateur 104 à l'arrêt sur une position laissant passer la lumière en provenance de la source 100, ouvert au maximum le diaphragme 132, mis le miroir 133 en position « émission », puis déclenché le balayage du document disposé en 15 en mettant en marche soit le moteur 106, soit le moteur 135 suivant la version choisie.

L'image de la source 100, projetée par le condensateur 102, illumine la fente-diaphragme 103, dont l'image est projetée par l'objectif 131 et le miroir 133, sur le document à photocopier disposé dans les moyens de positionnement 15. Comme le montre la figure 4, le segment lumineux ainsi formé éclaire le coin haut gauche du document à télécopier et le balaye d'un mouvement continu suivant la direction « lignes » de la gauche vers la droite selon la direction indiquée par la flèche $f_1$. Lorsque le segment lumineux a atteint le bord extrême droit, le bloc logique 16 met en marche le moteur pas à pas 151 qui déplace les moyens de positionnement 15 suivant la direction indiquée par la flèche $F_1$ (direction « colonnes ») d'une longueur égale à celle du trait lumineux, puis inverse le mouvement des moteurs 106 ou 135 ; le balayage « lignes » repart alors en sens contraire, suivant la direction indiquée par la flèche $F_2$. Les deux mouvements alternés se poursuivent jusqu'à ce que le trait lumineux ait balayé la totalité de la page.

L'objectif 131 reforme par l'intermédiaire du miroir semi-transparent 130, l'image de la partie éclairée sur la mosaïque linéaire de détecteurs 12. La résistance de chaque élément est modulée en fonction de l'éclairement reçu, qui dépend de la plus ou moins grande absorption, vis-à-vis du rayonnement lumineux, du point correspondant du document à transmettre disposé dans le plan 15. Le générateur de commande 170 permet de lire successivement, toujours dans le même ordre, les variations de résistance des photoconducteurs 121, ..., 12P, qui apparaissent sous forme de variations de tension aux bornes de la résistance R. Ces variations, amplifiées par l'amplificateur 171, constituent le signal transmis $S_L$. La lecture de la matrice demande un temps $t_1$, à raison de $t_1/P$ par éléments. Si $l_1$ est la largeur de la fente-diaphragme 103, et g le grandissement linéaire de l'objectif 131, on adoptera comme vitesse de **déplacement v du trait lumineux dans le plan 15 :**

$v = g \cdot l_1/t_1$.

Une page de document, de largeur $L_1$ et de longueur $L_2$ se trouve ainsi analysée sous forme de $N_L$ $N_C$ points indépendants, le nombre de points par lignes $N_L$ et de lignes par pages $N_C$ étant respectivement :

$N_L = L_1/g \cdot l_1$ ;

$N_C = P \cdot L_2/g \cdot l_2$

($l_2$ étant la longueur de la fente-diaphragme 103). P lignes du document sont ainsi lues simultanément. Le temps mis par le dispositif pour lire simultanément les P lignes est :

$T_L = t_1 L_1/g L_1$

et le temps de lecture d'une page :

$T = t_1 L_1 L_2/g^2 \cdot l_1 L_1$.

La mise sur position « réception » du bloc logique 16 entraîne la fermeture du diaphragme 132 sur l'ouverture minimale et met le miroir 133 en position « réception ». Une impulsion « début de lecture » fournie par le télécopieur de lecture, met en marche le moteur 105 du modulateur mécanique 104 et les moteurs 106 ou 135 permettant le balayage de la surface photosensible 14.

Le signal $S_R$ reçu par l'amplificateur 180, puis découpé en impulsions de fréquence $P/t_1$ par l'échantillonneur 181, est mis en mémoire par séries de P impulsions dans le convertisseur série-parallèle 182.

Le diagramme de la figure 5 montre comment ce convertisseur 182 applique ces impulsions aux électrodes de la cellule 11, en synchronisme avec les impulsions de chauffage et les impulsions lumineuses, le tout sous commande du bloc-logique 16. Il représente en fonction du temps t :

— dans la partie supérieure les variations de tension appliquées par le générateur d'impulsions de chauffage 190 aux bornes de la résistance chauffante 31 ;

— dans les parties intermédiaires les impulsions de tension de commande appliquées par le convertisseur série-parallèle 182 aux électrodes 311, 312 ..., 31P ;

— dans la partie inférieure, les variations d'intensité lumineuse reçues au niveau de la fente-diaphragme 103, en provenance de la source lumineuse 100 à travers le modulateur 104.

Le générateur 190 envoie dans la résistance 31, à la fréquence $1/t_1$, une impulsion de chauffage de durée $t_1/r$ (où r est supérieure à l'unité) qui, faisant transiter la couche 3 de la phase smectique en phase liquide isotrope, efface toute information précédemment enregistrée.

Dès que cette impulsion est terminée, le convertisseur 182 applique simultanément chacune des P impulsions précédemment mises en mémoire aux P électrodes 311, ..., 31P, qui reçoivent ainsi des tensions de commande respectivement proportionnelles aux signaux délivrés par les détecteurs 121, 122, ..., 12P de la mosaïque 12 du télécopieur émetteur. Ces impulsions sont appliquées à la fréquence $1/t_1$ pendant une durée : $mt_1/r$ (m étant supérieur à l'unité et inférieur à r).

La contre-électrode et résistance chauffante 31 étant alors à la masse, les électrodes engendrent, dans les éléments correspondants de la couche mésomorphe 3 qui transitent tous de la phase liquide à la phase smectique, des champs électriques proportionnels à la tension appliquée à l'électrode correspondante ; un champ inférieur à une valeur seuil entraîne le retour à une structure smectique désordonnée, donc diffusante, et le champ maximum le retour à une structure ordonnée, donc transparente. La cellule linéaire 11 reproduit ainsi, sous forme de variations du coefficient de diffusion, les variations de luminosité de l'élément de colonne du document transmis telles qu'elles sont mesurées par la mosaïque 12 du télécopieur émetteur. Ces variations du coefficient de diffusion subsistent jusqu'à leur effacement par l'impulsion de chauffage suivante.

Lorsque les impulsions de tension de commande ont pris fin, le modulateur mécanique 104 démasque la source lumineuse 100, qui illumine la fente diaphragme 103. Ceux des éléments de la couche 3 qui sont en phase smectique ordonnée, donc non diffusants, ne modifient pas le trajet du faisceau lumineux incident, qui traverse dans sa totalité le diaphragme 132 ; la couche photosensible 14 reçoit pour ces points l'éclairement maximal. Par contre, plus la structure des éléments de la couche 3 est désordonnée, plus ces éléments sont diffusants et envoient une fraction importante au flux lumineux ayant traversé la fente-diaphragme 103 en dehors de l'ouverture du diaphragme 132, ouverture qui, comme précédemment indiquée est, en position « réception », juste suffisante pour laisser passer le flux non diffusé ; il s'ensuit que la couche photosensible reçoit d'autant moins d'énergie lumineuse que le point correspondant des moyens d'affichage intermédiaires constitués par la cellule 11 est plus diffusant. Les impulsions lumineuses, qui se répètent également à une fréquence $1/t_1$, ont une durée $(r - m - 1)\ t_1/r$.

Chaque impulsion lumineuse permet l'enregistrement par la surface photosensible d'un segment de colonne comportant P points. Après $N_L$ impulsions, P lignes consécutives du document transmis ont été ainsi enregistrées. Un top de synchronisation ligne, en provenance de l'émetteur, déclenche le moteur pas-à-pas 143, qui fait avancer la surface photosensible 14 d'une longueur égale à celle de l'image des P points formant le segment de colonne. Les moteurs de balayage 106 ou 135 inversent alors leur sens de marche, pour l'enregistrement des P lignes suivantes. Contrairement à ce qui est représenté sur la figure 1, le déplacement de la surface photosensible 14 s'effectue suivant une direction perpendiculaire au plan de la figure.

A titre d'exemple de réalisation pratique, la fente-diaphragme 103 présente une ouverture rectangulaire de largeur $l_1 = 25\ 10^{-3}$ mm et de longueur $l_2 = 100$ mm. Les électrodes 311, ..., 31P et les photodétecteurs 211, ..., 21P sont au nombre de P = 20, leur largeur est de 30 µm, leur longueur (orientée dans le sens de la longueur de la fente 103) de 45 µm, l'espacement entre deux électrodes consécutives

étant de 5 μm. La résistance chauffante 31 a une longueur de 1,05 mm, une largeur de 30 μm ; le quotient de sa résistivité par son épaisseur a une valeur RO = 12 Ω ; la résistance de l'élément 31 est donc de l'ordre de 400 Ω. Les impulsions de chauffage ont une fréquence de 1 000 Hz, soit t = 1 ms ; les durées des impulsions : de chauffage, de tension de commande et de lumière sont respectivement 0,1 ms (r = 10), 0,7 ms (m = 7) et 0,2 ms. L'objectif 131 travaille à un grandissement g = 5.

Dans ces conditions, une page dactylographiée, de format 21 × 27 $cm^2$ est transcrite avec une **définition élevée de $N_L$ = 1 680 points/ligne et $N_C$ = 1 080 lignes/page, soit un total de** 1,8 $10^6$ points/page. Compte-tenu de ce que le dispositif permet d'inscrire un segment de colonne de 20 points en 1 ms, l'inscription d'une page entière demande environ 90 s. Cette vitesse d'inscription est compatible avec la vitesse de transcription d'une ligne téléphonique normale (2 400 bauds) travaillant en compression d'information sans transmettre les demi-teintes.

Les figures 5 et 6 se rapportent à un deuxième exemple de réalisation de l'invention, permettant d'obtenir un document transmis présentant une définition aussi élevée que le premier, mais avec une vitesse supérieure. Ce dispositif est conçu pour être couplé à une ligne de transmission de données à grand débit. La cellule 11 de la figure 1 est conçue pour afficher une ligne entière du document transmis et sa commande, aussi bien que celle de la mosaïque linéaire de détecteurs 12, s'effectue par multiplexage.

La figure 6, relative à la partie « émetteur » du dispositif, montre l'agencement d'une mosaïque linéaire de photo-détecteurs comprenant Q ensembles de chacun P photo-conducteurs, où, pour simplifier l'exposé, les valeurs de P et Q ont été réduites à P = 4 et Q = 3. Elle montre également le schéma du générateur de commande 170 associé, qui effectue la lecture des photoconducteurs par multiplexage.

Les 12 détecteurs 211 à 214, 221 à 224 et 231 à 234 sont alignés, régulièrement espacés, pour couvrir l'image de la fente-diaphragme 103, fournie, comme dans la première version, par l'objectif 131 et le miroir semi-transparent 130. Les premières bornes des photoconducteurs d'un même ensemble 211 à 214, 221 à 224 ou 231 à 234 sont interconnectées ; elles sont reliées par trois lignes distinctes à un même pôle d'un générateur de tension $E_1$ par le canal de trois interrupteurs $J^1$, $J^2$ et $J^3$, électriquement commandés par un bloc de commande $C_1$, piloté par le signal provenant du bloc logique 16. Les interrupteurs $J^1$, $J^2$, $J^3$, le générateur $E_1$ et le bloc de commande $C_1$ font partie du générateur de commande 170 ; en font également partie quatre autres interrupteurs $J_1$, $J_2$, $J_3$ et $J_4$, eux aussi électriquement commandés par le bloc $C_1$, et une résistance de charge commune $R_1$. Les secondes bornes des photo-conducteurs de rang 1 de chaque ensemble, à savoir les photo-conducteurs 211, 221 et 213 sont interconnectées et débitent sur la résistance $R_1$ par le canal de l'interrupteur $J_1$ ; il en va de même pour les secondes bornes des photoconducteurs de rang 2 : 212, 222 et 232 par le canal de l'interrupteur $J_2$, celles des photo-conducteurs de rang 3 : 213, 223 et 233 par le canal de l'interrupteur $J_3$ et celles de rang 4 : 214, 224 et 234 par le canal de l'interrupteur $J_4$. Le signal lu par les photoconducteurs est prélevé sur la borne amont de la résistance $R_1$ et envoyé à l'entrée de l'amplificateur 171.

La longueur de la fente-diaphragme 103 et le grandissement g de l'objectif 131 étant calculés pour que l'image de la fente 103 couvre une ligne du document à télécopier, la mosaïque linéaire 12 permet de lire point par point la totalité de cette même ligne. A cet effet, le bloc $C_1$ maintenant fermé le seul interrupteur $J^1$, commande la fermeture, pendant des intervalles de temps égaux, successivement des interrupteurs $J_1$, $J_2$, $J_3$ et $J_4$. Les mêmes séquences se reproduisent avec $J_2$ fermé et $J_1$, $J_3$ ouverts, puis $J_3$ fermé et $J_1$, $J_2$ ouverts, de telle façon que la totalité des photoconducteurs de la mosaïque débitent successivement dans la résistance $R_1$.

Le passage à la lecture de la ligne suivante s'effectue alors, soit en déplaçant l'image de la fente-diaphragme 103 par un mouvement pas-à-pas des moteurs 104 ou 135, soit en déplaçant le document lui-même par un mouvement pas-à-pas du moteur 151 ; dans ce cas, contrairement à ce qu'indique la figure 1, la translation des moyens de positionnement 15 s'effectue dans le plan de la figure, parallèlement à l'axe optique commun des objectifs 102 et 131. Dès que la translation est effectuée, le même cycle de lecture des photo-détecteurs de la mosaïque 12 se reproduit. Ces actions alternées : lecture point par point d'une ligne-translation à la ligne suivante, se répètent jusqu'à lecture totale de la page.

Les figures 7a et 7b se rapportent à la partie récepteur du télécopieur et montrent respectivement la disposition des résistances chauffantes et des électrodes sur les faces internes des lames 20 et 21, ainsi que le schéma des connexions destinées à les commander.

La figure 7a représente, dans une version simplifiée, la configuration des dépôts conducteurs transparents disposés sur la face interne de la lame 20. Ces dépôts forment Q = 3 résistances distinctes 31, 32 et 33, placées bout à bout et couvrant toute la surface de la fente-diaphragme 103 ; cette dernière est disposée comme dans le premier exemple de réalisation, et conformément à la figure 2a, sur la face externe de cette même lame. Chaque résistance a une de ses bornes reliée à la masse ; aux trois autres bornes aboutissent trois lignes distinctes 301, 302 et 303, véhiculant les impulsions de chauffage $I_{C1}$, $I_{C2}$ et $I_{C3}$ en provenance du générateur d'impulsions de chauffage 190.

La figure 7b représente, toujours dans la même version simplifiée, les dépôts conducteurs transparents disposés sur la face interne de la lame 21 pour faire office d'électrodes 3ij. Pour faciliter la compréhension du dispositif, les résistances 31, 32 et 33 qui leur font vis-à-vis ont été, sur cette même figure, représentées en traits ponctués. La cellule comporte Q = 3 ensembles (ou groupes) de P = 4

électrodes identiques. Les électrodes d'un même ensemble, par exemple les électrodes 321 à 324, sont disposées vis-à-vis d'une même résistance en l'ocurrence l'électrode 32. Les dimensions et le pas des électrodes sont identiques aux dimensions et au pas des surfaces sensibles des photo-détecteurs comportant la mosaïque linéaire, représentée par la figure 6.

Les électrodes de rang j des 3 ensembles : 31j, 32j et 33j sont connectées à une ligne commune 34j, reliée à l'une des bornes de sortie du convertisseur série-parallèle 182 pour recevoir les impulsions de tension de commande $V_{Cj}$ ; ainsi les trois électrodes de rang 3 : 313, 323 et 333 sont reliées à la ligne unique 343 pour recevoir les impulsions $V_{C3}$.

L'inscription d'une ligne de rang n sur la surface photosensible 14 s'effectue comme suit. On prendra comme instant de départ le moment où la ligne de rang n – 1, inscrite dans la cellule 11 sous la forme de P × Q points distincts (soit 12 points dans le cas de la version simplifiée décrite par les figures 6, 7a et 7b) vient d'être projetée sur la surface 14. Les impulsions de chauffage $I_{C1}$, $I_{C2}$, $I_{C3}$ ont toutes même durée $t_1$ et se succèdent à la fréquence $1/t_1$. La chaleur dégagée par chaque impulsion dans la résistance correspondante porte momentanément la portion adjacente de la couche 3 en phase isotrope et efface l'information qui y était précédemment enregistrée.

La durée $t_1$ de la première impulsion de chauffage $I_{C1}$ appliquée à la résistance 31 est mise à profit pour déplacer de l'écartement entre deux lignes consécutives soit l'image projetée sur la surface 14 grâce à un mouvement pas-à-pas des moteurs 106 à 135, soit la surface photosensible 14 elle-même par un mouvement pas-à-pas du moteur 143, selon la version choisie du dispositif. Pendant que la seconde impulsion de chauffage $I_{C2}$ est appliquée à la résistance 32, le convertisseur série-parallèle 182 applique simultanément, pendant un temps $t_1$, sur les quatre lignes 341 à 344 les impulsions de tension de commande $V_{C1}$ à $V_{C4}$, qui sont, dans l'ordre, les quatre premières impulsions échantillonnant le signal vidéo correspondant au début de la ligne n. Un même signal, $V_{C1}$ par exemple, se trouve ainsi appliqué à trois électrodes différentes : 311, 321 et 331 ; mais seule la tension appliquée à l'électrode 311 modifie les propriétés optiques de la portion adjacente de la couche 3 ; en effet, seule la portion de la couche 3 faisant face à la résistance 31 est dans l'étape de refroidissement de la phase liquide à la phase smectique. Les quatre premiers signaux sont ainsi enregistrés uniquement dans les portions de la couche 3 comprises entre la résistance chauffante 31 et les électrodes 311 à 314. Comme précédemment expliqué, l'enregistrement se fait sous forme de variations du coefficient de diffusion, la diffusion étant d'autant plus prononcée que l'impulsion de tension de commande est plus faible et se maintenant tant que l'élément n'est pas à nouveau porté en phase liquide.

D'une façon plus générale, les P impulsions de commande simultanément délivrées par le convertisseur 182 à l'ensemble des électrodes pendant la durée de l'impulsion de chauffage appliquée à la résistance 3j agissent sur le cristal liquide au seul niveau de la résistance 3 (j – 1). Le temps $t_1$ doit être suffisant pour permettre :

— d'une part, à l'impulsion de tension d'ordonner éventuellement les molécules du matériau mésomorphe afin de contrecarrer, lors du refroidissement pendant la transition nématique-smectique, l'établissement spontané d'un état désordonné diffusant ;

— et d'autre part, un refroidissement suffisant de la couche interdisant aux impulsions de tension ultérieures d'exercer leur action orientatrice.

Des valeurs de $t_1$ de l'ordre de 0,5 ms répondent à ce double impératif lorsque l'on utilise comme matériau mésomorphe le C. O. B. précédemment cité sous une épaisseur d'une dizaine de microns.

Lorsque la totalité de la ligne a été enregistrée selon le processus décrit ci-dessus, processus qui a demandé le temps $Qt_1$ (soit $3t_1$ dans la version simplifiée décrite), le modulateur 104 laisse apparaître la source 100 pendant une durée $t_2$ suffisante pour permettre à la couche photo-sensible 14 d'enregistrer la ligne n intermédiairement affichée par la cellule 11. Un cycle identique se reproduit alors pour l'enregistrement de la ligne de rang n + 1.

A titre d'exemple d'application de ce deuxième type de réalisation du dispositif selon l'invention, on adopte, pour la fente-diaphragme 103, une largeur $l_1 = 60$ μm et une longueur $l_2 = 52,5$ mm, l'objectif 131 travaillant au grandissement 4. Les résistances chauffantes sont au nombre de Q = 36, écartées de 5 μ les unes des autres et présentent une valeur R = 10 Ω. A chaque résistance sont superposées P = 48 électrodes de 65 μm sur 25 μm, espacées les unes des autres de 5 μm. Une page 21 cm × 27 cm est ainsi reproduite sous forme de 1 200 lignes de P × Q = 1 728 points chacune, par une cellule ne demandant que P + Q = 84 entrées.

En adoptant pour $t_1$ une valeur de 0,5 ms, et pour $t_2$ une valeur de 1 ms, la durée totale d'inscription d'une ligne est de 19 ms, soit 23 s pour l'inscription d'une page. En se référant aux caractéristiques moyennes de sensibilité des papiers à revêtement argentique développables à chaud, on constate qu'on peut utiliser, pour la source 100 une lampe à filament de tungstène dont la puissance est de l'ordre de 50 watts. La puissance moyenne dissipée par les éléments résistifs de la cellule est de l'ordre de 30 mwatts.

Sans quitter le cadre de la présente invention, il est possible de disperser au sein du matériau mésomorphe des particules présentant une direction privilégiée d'absorption de la lumière et dont l'orientation est commandée par celle du matériau mésomorphe, conformément à la demande de brevet en France, déposée le 3 Décembre 1976 par la Demanderesse sous le numéro d'enregistrement national 76 36 532 et intitulée : « Cellule à cristal liquide ». Les variations de coefficient de diffusion de la couche

mésomorphe 3 sont alors renforcées par des variations de coefficient d'absorption, ce qui permet de travailler avec des objectifs 102 et 131 plus ouverts et de supprimer le diaphragme 132.

## Revendications

1. Procédé de télécopie pour engendrer un signal vidéo transcrivant un document à reproduire et fournir, sur réception d'un tel signal, une copie de ce document ; le signal vidéo résultant de l'analyse du document faite sous forme de segments successifs de N points par des moyens photodétecteurs : la copie étant obtenue par une succession alternée d'étapes d'inscription intermédiaire et d'inscription définitive ; l'inscription intermédiaire étant faite par un procédé thermo-optique dans une couche (3) comprenant un matériau mésomorphe présentant une phase smectique et l'inscription définitive résultant de la projection de cette inscription intermédiaire sur des moyens photosensibles (14) ; ce procédé étant caractérisé en ce que ladite couche ayant la forme d'une bande rectiligne, l'étape d'inscription intermédiaire comporte l'enregistrement dudit segment de N points sur la longueur de cette bande sous forme de Q sous-segments successifs juxtaposés de P points simultanés ; P, Q et N étant des entiers, P et Q étant respectivement supérieur et au moins égal à l'unité et le produit P × Q étant égal à N ; l'enregistrement d'un sous-segment étant précédé d'un échauffement transitoire simultané des P points de la portion correspondante de ladite bande pour porter le matériau mésomorphe de sa phase smectique en sa phase liquide isotrope, durant lequel tout enregistrement préalable est effacé de ladite portion, et étant ensuite obtenu en soumettant cette même portion, durant son refroidissement subséquent à la température initiale, à P impulsions de tension de commande simultanées représentant le signal reçu ; l'étape d'inscription définitive comportant la projection simultanée des N points intermédiairement inscrits dans la couche.

2. Télécopieur émetteur-récepteur pour la mise en œuvre du procédé selon la revendication 1, caractérisé en ce qu'il comporte :

— ladite couche (3) comprenant un matériau mésomorphe présentant une phase smectique, enserrée entre deux lames transparentes (20 et 21) ;

— Q éléments résistifs (3i), identiques, transparents, rectilignes et alignés disposés sur la face interne d'une des lames, pour chacun, sous l'action d'une impulsion de chauffage, porter transitoirement la partie de la couche qui lui fait face d'une première température où ledit matériau mésomorphe est dans ladite phase smectique à une seconde température où il est dans ladite phase liquide isotrope ;

— Q groupes de chacun P électrodes (3ij) de commande identiques et transparentes disposées en alignement sur la face interne de l'autre lame, chaque groupe faisant face à un dit élément résistif ;

— des moyens (190) générateurs d'impulsions de chauffage pour émettre à période fixe des séquences de Q impulsions de chauffage identiques et de fréquence constante et adresser les impulsions d'une même séquence successivement à chacun des éléments résistifs ;

— des moyens (180, 181 et 182) générateurs d'impulsions de commande pour mettre en mémoire par groupes successifs de P points consécutifs, ledit signal vidéo, et le restituer sous la forme de séquences de même période que les séquences d'impulsions de chauffage, chaque séquence comprenant Q groupes successifs desdites P impulsions de tension de commande simultanées ; ces impulsions ayant même fréquence que les impulsions de chauffage ; l'impulsion de commande de rang i d'un même groupe étant simultanément délivrée à chaque électrodes de rang i des Q groupes d'électrodes de commande ;

— des moyens de commande (16) agissant sur les moyens générateurs d'impulsions de chauffage et de commande pour que la séquence d'impulsions de commande de rang n soit délivrée avec un retard constant, égal à au moins une fois la durée d'une impulsion de chauffage, par rapport à la séquence d'impulsions de chauffage de même rang, et qu'un laps de temps constant sépare la fin de la séquence d'impulsions de commande de rang n du début de la séquence d'impulsions de chauffage de rang n + 1 ;

— des moyens d'éclairement (100, 101 et 102) pour projeter un flux lumineux sur la couche pendant ledit laps de temps ;

— des moyens de projection (131) pour recueillir au moins partie de ce flux lumineux après traversée de la couche et former une image de cette dernière ;

— des moyens photosensibles (14) pour enregistrer cette image, et

— des moyens de déplacement (140, 141, 142, 143) pour assurer le déplacement relatif de cette image par rapport aux moyens photosensibles.

3. Télécopieur suivant la revendication 2, caractérisé en ce que les moyens d'éclairement (100, 101 et 102) et les moyens de projection (131) sont utilisables pour projeter l'image d'une partie du document à transmettre sur lesdits moyens photodétecteurs, ceux-ci étant formés par une mosaïque linéaire (12) de détecteurs photoélectriques (121, 122, ..., 128).

4. Télécopieur suivant la revendication 2, caractérisé en ce que le matériau mésomorphe contient en dispersion des particules d'un second matériau présentant une direction privilégiée d'absorption de la lumière et dont l'orientation est commandée par celle du matériau mésomorphe.

**Claims**

1. Telecopying method for generating a video signal transcribing a document to be reproduced and for providing a copy of this document upon reception of this signal ; the video signal resulting from an analysis of the document by successive segments of N points using photodetector means ; the copy being obtained by an alternating succession of intermediate inscription and final inscription steps ; the intermediate inscription being performed by a thermo-optic method in a layer (3) comprising a mesomorphous material presenting a smectic phase, and the final inscription resulting from the projection of this intermediate inscription onto photosensitive means (14) ; this method being characterized in that said layer having the form of a rectilinear strip, the intermediate inscription step comprises storing of said segments of N points over the length of this strip in the form of Q successive adjacent sub-segments of P simultaneous points ; P, Q and N being integers, P and Q exceeding unity and being at least equal to unity, respectively, and the product P × Q being equal to N : the storing of one sub-segment being preceded by the momentary simultaneous heating of P points of the corresponding portion of said strip for heating the mesomorphous material from its smetic phase to its isotrope liquid phase, during which any previously stored element is erased from said portion, and being subsequently obtained by submitting said same portion, during its subsequent cooling to the initial temperature, to P simultaneous control voltage pulses representing the received signal ; the final inscription step comprising the simultaneous projection of the N points momentarily inscribed into the layer.

2. Receiver-transmitter telecopier for performing the method in accordance with claim 1, characterized in that it comprises :

— said layer (3) comprising a mesomorphous material presenting a smectic phase and sandwiched between two transparents plates (20 and 21) ;

— Q identical, transparent, rectilinear and aligned resistive elements (3i) arranged on the inner face of one of the plates, each for momentarily heating the facing portion of the layer from a first temperature where the mesomorphous material is in its smectic phase to a second temperature where it is in said isotrope liquid phase under the action of a heating pulse ;

— Q groups each of P identical and transparent control electrodes (3ij) aligned on the inner face of the other plate, each group facing one of the resistive elements ;

— heating pulse generator means (190) delivering sequences of Q identical heating pulses of fixed period and constant frequency and for addressing the pulses of the same sequence successively to each of the resistive elements ;

— control pulse generator means (180, 181 and 182) for storing said video signal in successive groups of P successive points and for restitution of said signal in the form of sequences having the same period as the heating pulse sequences, each sequence comprising Q successive groups of said P simultaneous control voltage pulses ; these pulses having the same frequency as the heating pulses ; the control pulse of the order i of the same group being simultaneously delivered to each electrode of the order i of the Q control electrode groups ;

— control means (16) acting upon the heating pulse and the control pulse generator means in order that the control pulse sequence of the order n be delivered with a constant delay with respect to the heating pulse sequence of the same order, said delay being at least equal the duration of one heating pulse, and that a constant time gap separates the end of the control pulse sequence of the order n from the beginning of the heating pulse sequence of the order n + 1 ;

— illuminating means (100, 101 and 102) for projecting a light flow onto the layer during said time gap ;

— projection means (131) for receiving at least part of this light flow after its crossing of the layer and for forming an image of the latter ;

— photosensitive means (14) for storing this image, and

— moving means (140, 141, 142, 143) for assuring the relative movement of this image with respect to the photosensitive means.

3. Telecopier in accordance with claim 2, characterized in that the illumination means (100, 101 and 102) and the projection means (131) are adapted to be used for projecting an image of part of the document to be transmitted upon said photodetector means, the latter being formed by a linear mosaic (12) of photoelectric detectors (121, 122, ..., 128).

4. Telecopier in accordance with claim 2, characterized in that the mesomorphous material contains dispersed particles of a second material having a preferential direction of light absorption and the orientation of which is controlled by that of the mesomorphous material.

**Ansprüche**

1. Fernkopierverfahren zur Erzeugung eines Videosignals, daş ein zu reproduzierendes Dokument beschreibt, und zur Erzeugung einer Kopie dieses Dokumentes beim Empfang dieses Signals ; wobei das Videosignal aus der Analyse des Dokumentes resultiert, die an aufeinanderfolgenden Segmenten von N Punkten durch Fotodetektormittel vorgenommen wird ; wobei die Kopie durch eine Aufeinanderfolge von

abwechselnden Zwischenaufzeichnungs- und endgültigen Aufzeichnungsschritten erhalten wird ; wobei die Zwischenaufzeichnung durch ein thermooptisches Verfahren in einer Schicht (3) vorgenommen wird, die ein mesomorphes Material enthält, welches eine smektische Phase aufweist, während die endgültige Aufzeichnung aus der Projektion dieser Zwischenaufzeichnung auf fotoempfindliche Mittel (14) resultiert ; wobei dieses Verfahren dadurch gekennzeichnet ist, daß der Schritt der Zwischenaufzeichnung, wenn die genannte Schicht die Form eines geradlinigen Bandes aufweist, die Speicherung des genannten Segmentes aus N Punkten über die Länge dieses Bandes in Form von Q aufeinanderfolgenden, nebeneinanderliegenden Untersegmenten zu P gleichzeitigen Punkten umfaßt ; wobei P, Q und N ganze Zahlen sind, von denen P größer als 1 und Q wenigstens gleich 1 ist, während das Produkt $P \times Q$ gleich N ist ; wobei der Speicherung eines Untersegmentes eine vorübergehende gleichzeitige Erwärmung der P Punkte des entsprechenden Teiles des Bandes vorausgeht, um das mesomorphe Material aus seiner smektischen Phase in seine isotrope Flüssigphase zu überführen, wobei während dieser Dauer jede vorhergehende Aufzeichnung von dem genannten Teil gelöscht wird und die Speicherung anschließend erhalten wird, indem dieser selbe Teil während seiner darauffolgenden Abkühlung auf die Anfangstemperatur P gleichzeitigen Steuerspannungsimpulsen ausgesetzt wird, die das empfangene Signal darstellen ; wobei der Schritt der endgültigen Aufzeichnung die gleichzeitige Projektion der N vorübergehend in der Schicht eingeschriebenen Punkte umfaßt.

2. Sende-Empfangs-Fernkopierer zur Durchführung des Verfahrens nach Anspruch 1, dadurch gekennzeichnet, daß er umfaßt :

— die genannte Schicht (3), die ein mesomorphes Material umfaßt, welches eine smektische Phase aufweist und zwischen zwei lichtdurchlässige Scheiben (20 und 21) eingefaßt ist ;

— Q einander gleiche, lichtdurchlässige, geradlinige resistive Elemente (3i), die miteinander ausgerichtet auf der Innenfläche einer der Scheiben angeordnet sind, um jeweils unter der Wirkung eines Heizimpulses den ihm gegenüberliegenden Teil der Schicht vorübergehend von einer ersten Temperatur, bei der das mesomorphe Material in der genannten smektischen Phase ist, auf eine zweite Temperatur zu erwärmen, bei der es in der isotropen Flüssigphase ist ;

— Q Gruppen von jeweils P einander gleichen, lichtdurchlässigen Steuerelektroden (3ij), die miteinander ausgerichtet auf der Innenfläche der anderen Scheibe angeordnet sind, wobei jede Gruppe einem der genannten resistiven Elemente zugewandt ist ;

— Heizimpuls-Erzeugungsmittel (190) zum Abgeben von Folgen aus Q einander gleichen Heizimpulsen konstanter Frequenz mit fester Periode und zum Anlegen der Impulse jeweils einer Folge nacheinander an jedes der resistiven Elemente ;

— Steuerimpuls-Erzeugungsmittel (180, 181 und 182) zur Speicherung des genannten Videosignals in aufeinanderfolgenden Gruppen zu P aufeinanderfolgenden Punkten und zur Wiedergabe des Videosignals in Form von Folgen derselben periode wir die Heizimpulsfolgen, wobei jede Folge Q aufeinanderfolgende Gruppen der genannten P gleichzeitigen Steuerspannungsimpulse umfaßt ; wobei diese Impulse dieselbe Frequenz wie die Heizimpulse aufweisen ; wobei der Steuerimpuls mit dem Rang i jeweils ein und derselben Gruppe gleichzeitig an jede der Elektroden mit dem Rang i der Q Steuerelektrodengruppen angelegt wird ;

— Steuermittel (16), welche auf die Heizimpuls-Erzeugungsmittel und die Steuerimpuls-Erzeugungsmittel einwirken, damit die Steuerimpulsfolge mit dem Rang n mit einer konstanten Verzögerung, die wenigstens gleich der Dauer eines Heizimpulses ist, in bezug auf die Heizimpulsfolge desselben Ranges abgegeben wird und damit eine konstante Zeitspanne zwischen dem Ende der Steuerimpulsfolge mit dem Rang n und dem Anfang der Heizimpulsfolge mit dem Rang $n + 1$ liegt ;

— Beleuchtungsmittel (100, 101 und 102) zum Projizieren eines Lichtflusses auf die Schicht während der genannten Zeitspanne ;

— Projektionsmittel (131) zu Auffangen wenigstens eines Teiles dieses Lichtflusses nach dem Durchqueren der Schicht und zur Erzeugung einer Abbildung derselben ;

— fotoempfindliche Mittel (14) zur Aufzeichnung dieses Bildes ; und

— Verschiebungsmittel (140, 141, 142, 143) zur Gewährleistung der Relativverschiebung dieses Bildes in bezug auf die fotoempfindlichen Mittel.

3. Fernkopierer nach Anspruch 2, dadurch gekennzeichnet, daß die Beleuchtungsmittel (100, 101 und 102) und die Projektionsmittel (131) verwendbar sind zum Projizieren des Bildes eines Teiles des zu übertragenden Dokumentes auf die genannten Fotodetektormittel, welche aus einem linienförmigen Mosaik (12) von fotoelektrischen Detektoren (121, 122, ..., 128) gebildet sind.

4. Fernkopierer nach Anspruch 2, dadurch gekennzeichnet, daß das mesomorphe Material Teilchen eines zweiten Materials in Dispersion enthält, welches eine bevorzugte Lichtabsorptionsrichtung aufweist und dessen Orientierung durch diejenige des mesomorphen Materials gesteuert wird.

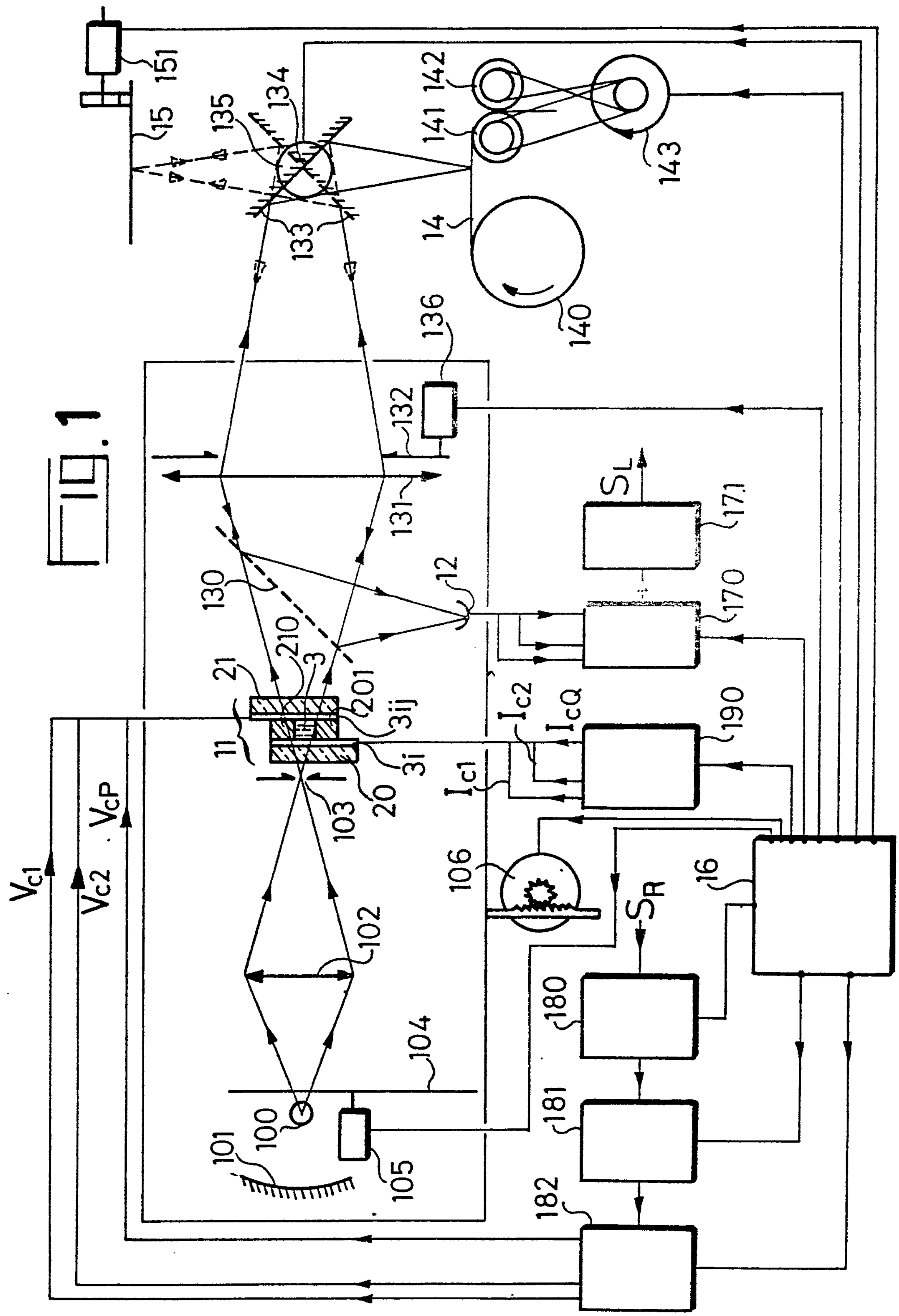
151
15
135
134
142
141
143
133
14
140
136
132
131
$S_L$
171
170
12
130
210
3
21
201
3ij
3i
20
11
103
$I_{c2}$
$I_{cQ}$
$I_{c1}$
190
$V_{c1}$
$V_{c2}$
$V_{cP}$
106
16
$S_R$
102
180
104
100
101
105
181
182

FIG. 1

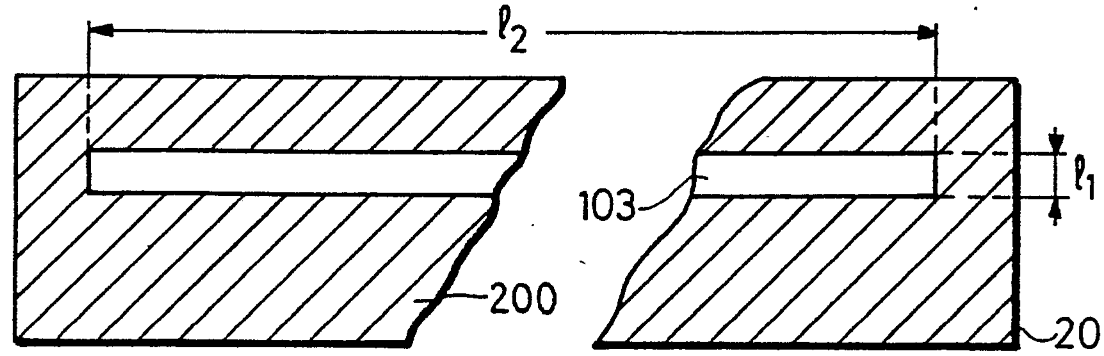


Fig. 2a

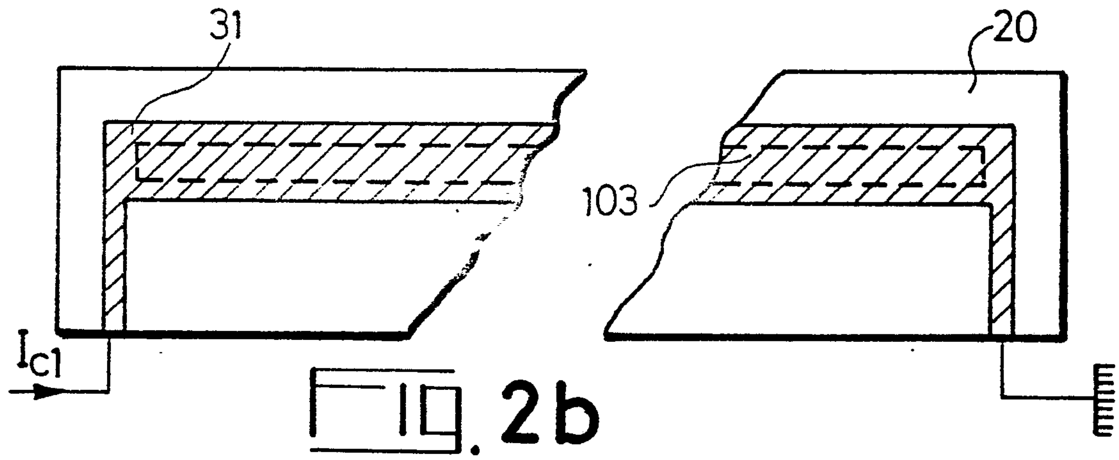


Fig. 2b

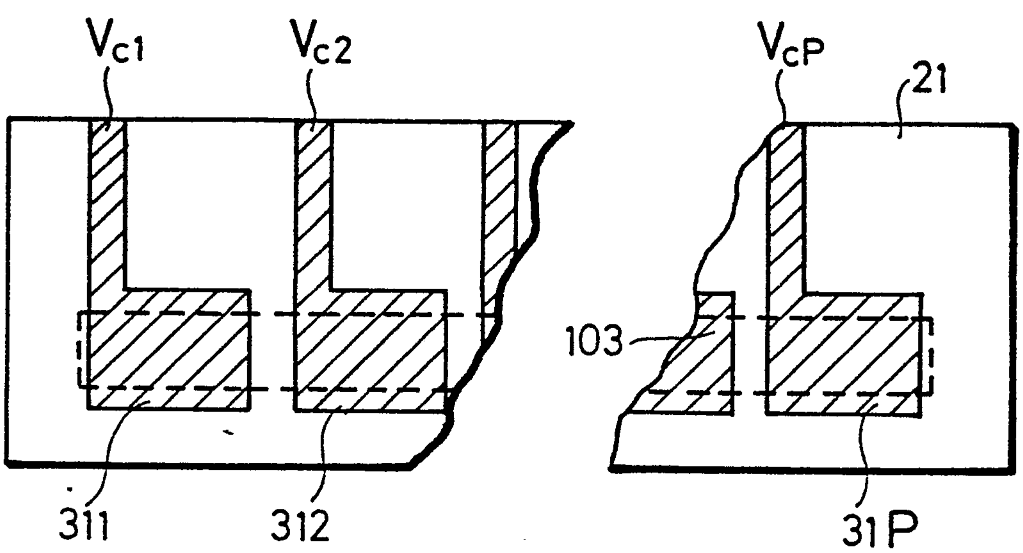


Fig. 2c

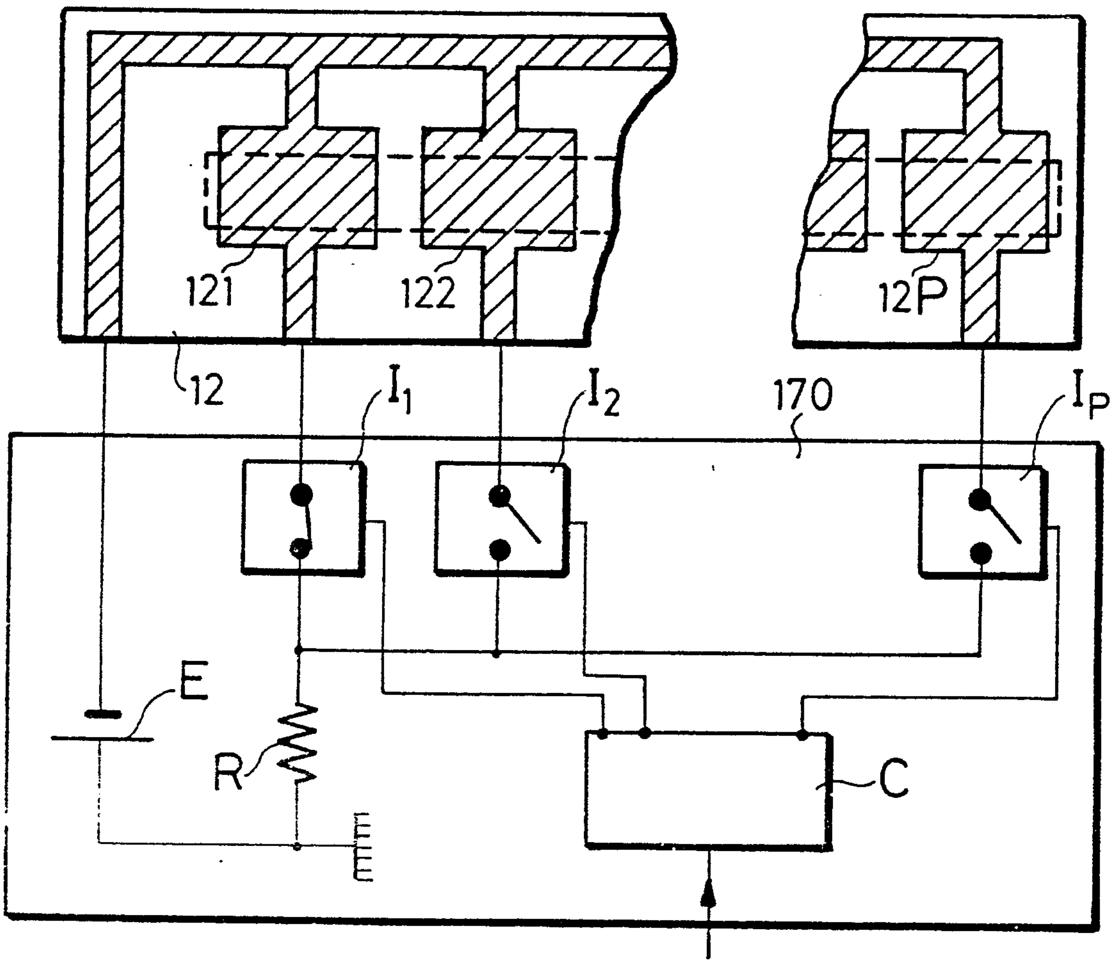


Fig. 3

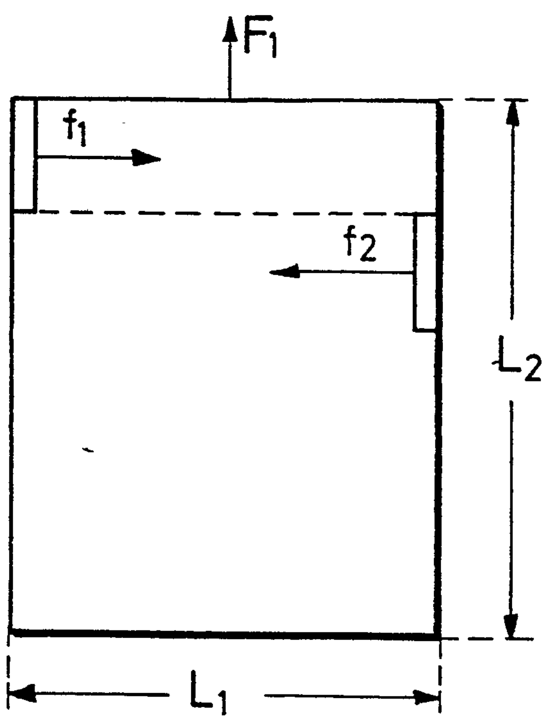


Fig. 4

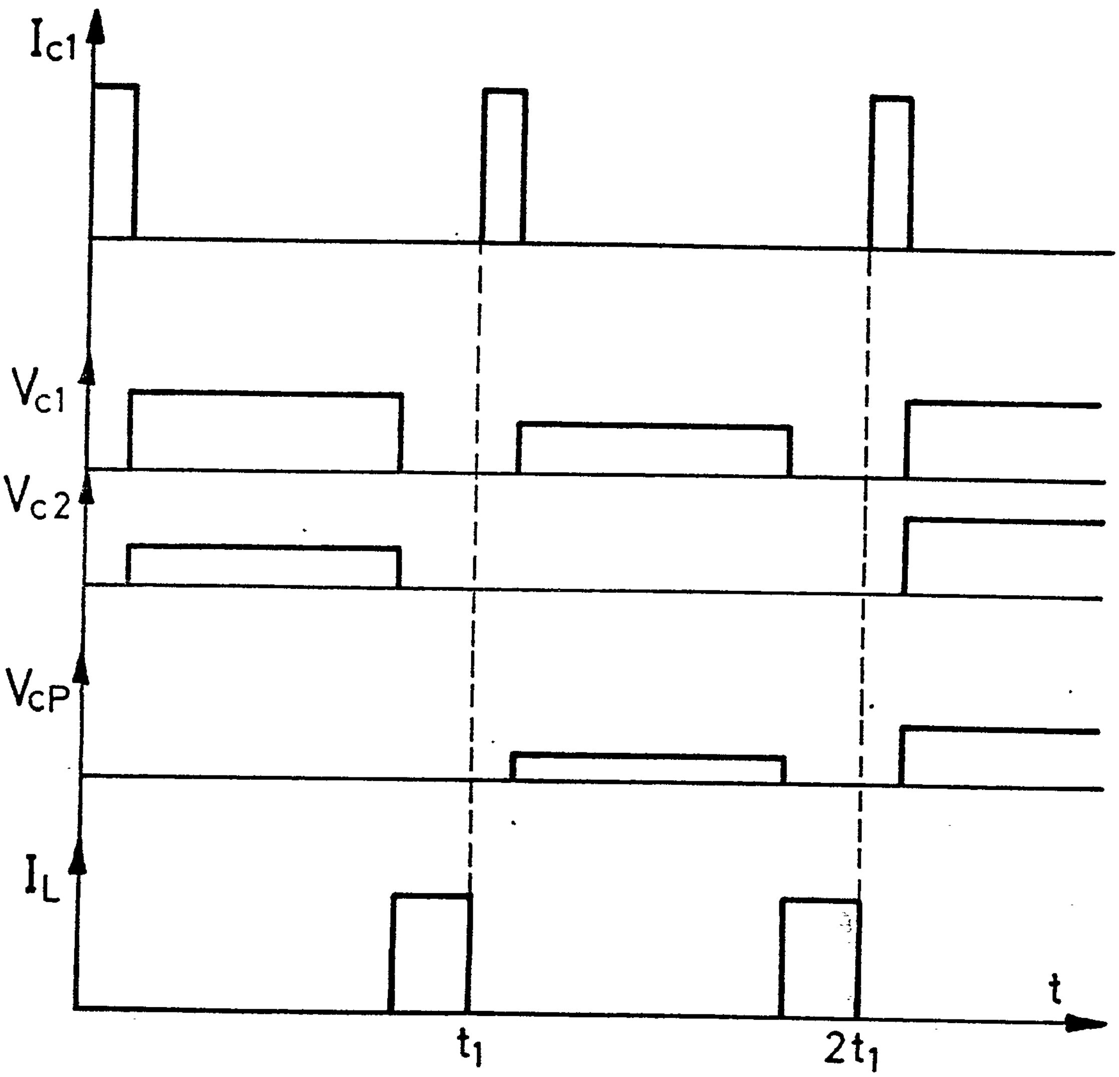


Fig. 5

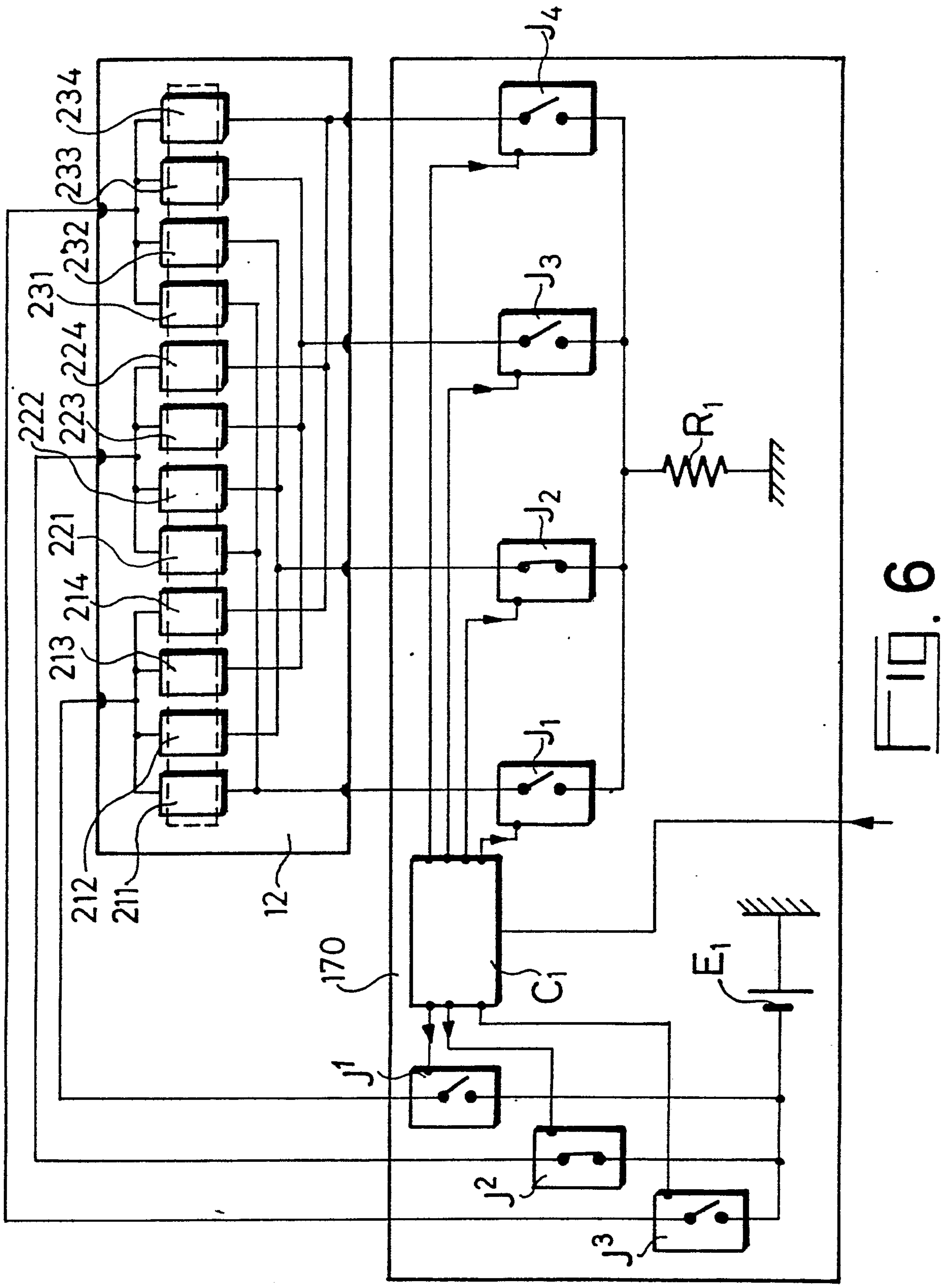
234
233
232
231
224
223
222
221
214
213
212
211
12
170
$C_1$
$E_1$
$J_1$
$J_2$
$J_3$
$J_4$
$R_1$
$J^1$
$J^2$
$J^3$

FIG. 6

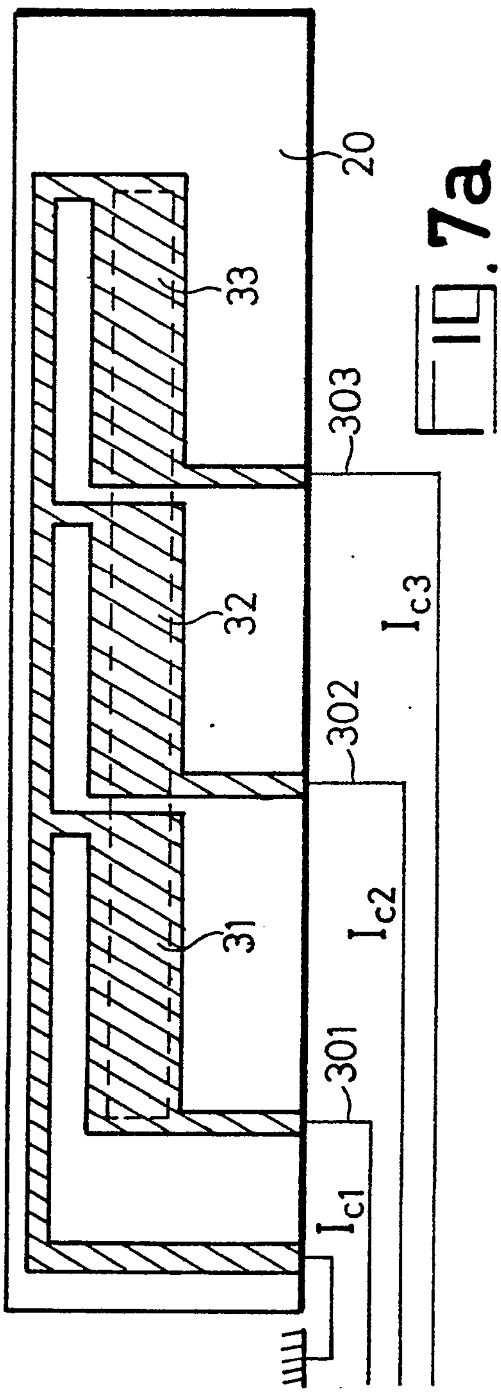
20
33
32
31
303
302
301
Ic1
Ic2
Ic3

Fig. 7a

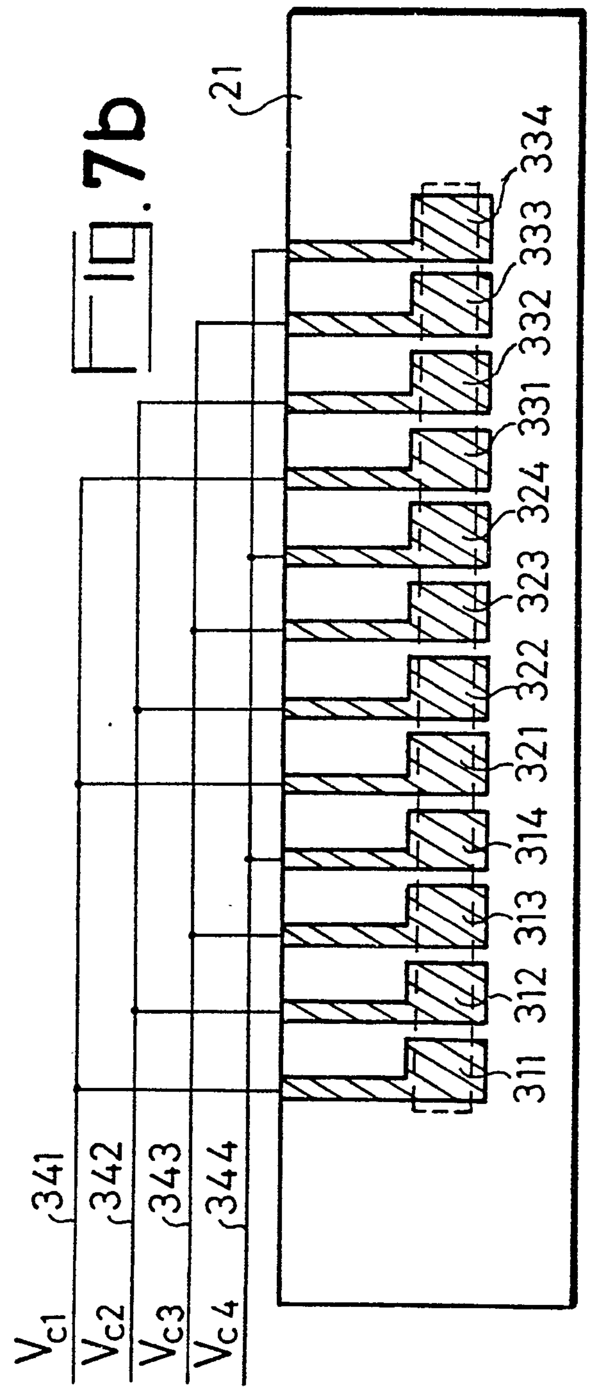
21
311
312
313
314
321
322
323
324
331
332
333
334
341
342
343
344
Vc1
Vc2
Vc3
Vc4

Fig. 7b